# EUROPÄISCHE PATENTSCHRIFT

(11) **EP 2 161 466 B1**
(45) Veröffentlichungstag und Bekanntmachung des Hinweises auf die Patenterteilung: **08.08.2012**
(21) Anmeldenummer: 09169215.2
(22) Anmeldetag: 02.09.2009
(51) Int. Cl.: F16D 21/06, F16D 25/0638

(54) **Mehrfachkupplungseinrichtung, insbesondere Doppelkupplungseinrichtung, mit mittels eines Lamellenträgers betätigbarer Lamellen-Kupplungsanordnung**
Multiple coupling device, in particular double coupling device, with lamella coupling assembly which can be actuated with a lamella holder
Dispositif d'embrayage multiple, notamment dispositif d'embrayage double, doté d'un agencement d'embrayage à lamelles pouvant être actionné à l'aide d'un support de lamelles

(30) Priorität: 09.09.2008 DE 102008046484; 29.01.2009 DE 102009000474
(43) Veröffentlichungstag der Anmeldung: 10.03.2010
(73) Patentinhaber: ZF Friedrichshafen AG, 88038 Friedrichshafen (DE)
(72) Erfinder: Großpietsch, Wolfgang, 97422 Schweinfurt (DE)

(56) Entgegenhaltungen:
- WO-A1-01/42674
- DE-A1-102004 015 927
- DE-A1-102007 027 119
- US-A1- 2007 193 848

## Beschreibung

Die Erfindung betrifft eine Mehrfachkupplungseinrichtung, insbesondere Doppelkupplungseinrichtung, zur Drehmomentübertragung in einem Abtriebsstrang zwischen einer Antriebsanordnung und einer Getriebeanordnung, umfassend:
- eine mit einem Abtriebselement der Antriebsanordnung gekoppelte oder koppelbare Eingangsseite;
- eine der Getriebeanordnung zugeordnete Ausgangsseite mit einem mit einem ersten Getriebeeingangselement gekoppelten oder koppelbaren ersten Ausgangselement und einem mit einem zweiten Getriebeeingangselement gekoppelten oder koppelbaren zweiten Ausgangselement;
- eine dem ersten Ausgangselement zugeordnete, auf Basis axialer Relativbewegungen betätigbare erste Lamellen-Kupplungsanordnung und eine dem zweiten Ausgangselement zugeordnete, auf Basis axialer Relativbewegungen betätigbare zweite Lamellen-Kupplungsanordnung, die jeweils wenigstens ein zwischen Lamellenträgern angeordnetes Lamellenpaket aufweisen, welches während einer Betätigung der Lamellen-Kupplungsanordnung im Sinne eines Einrückens axial einspannbar ist, um Drehmoment zwischen der Eingangsseite und dem betreffenden Ausgangselement zu übertragen.

Eine gattungsgemäße Mehrfachkupplungseinrichtung ist aus US2007/0193848 bekannt.

Bei der Doppelkupplungseinrichtung kann es sich um eine Doppel-Nasslaufkupplung handeln. Dies ist aber nicht zwingend.

Heutige Doppel-Lamellenkupplungen, die in der Regel als Nasslaufkupplungen ausgeführt sind, bestehen typischerweise aus zwei Einzelkupplungen in radialer oder axial paralleler Anordnung, mit drehmomentübertragenden Außen- und Innenlamellenträgern sowie dazwischen angeordneten Lamellensätzen. Die beiden Lamellen-Kupplungsanordnungen einer solchen Doppelkupplungseinrichtung werden durch große, radial innen geführte und Anpresskräfte auf die Lamellenpakete übertragende Kolben betätigt, die typischerweise in Blechbauweise ausgeführt sind.

Wichtiges konstruktives Merkmal solcher herkömmlicher Doppelkupplungseinrichtungen ist eine zentrale Kupplungsnabe, die in der Regel als Ölnabe mit einer Anzahl von Kanälen ausgeführt ist und Bestandteil der Ölzuführung ist. Bei nasslaufenden Doppelkupplungen wird vermittels oder durch die Ölnabe einerseits Kühlöl den Lamellenpaketen zugeführt und andererseits Drucköl einem jeweiligen, dem Betätigungskolben zugeordneten hydraulischen Nehmerzylinder zugeführt. Überdies hat eine solche herkömmliche Kupplungsnabe die Aufgabe der Durchleitung von Drehmomenten sowie der Abstützung von Lagerkräften. Es handelt sich also um multifunktionale Bauteile.

Typischerweise drehen sich solche Doppelkupplungen bis zur Ölnabe mit der Motordrehzahl und sind getriebeeingangswellenseitig oder/und motorgehäuseseitig gelagert. Strukturell sind herkömmliche Doppelkupplungen vergleichsweise kompliziert. Eine komplexe Schachtelung der verschiedenen Bauteile bedingt eine große Anzahl von Verbindungsstellen, in der Regel Schweißverbindungen, die mit hoher Präzision auszuführen sind. Es resultiert auch ein vergleichsweise großer Bauraumbedarf und Kostenaufwand.

Aus dem vorstehend kurz beschriebenen Grundkonzept resultieren schon wesentliche konstruktive und strukturelle Details des Aufbaus einer herkömmlichen Doppelkupplung und es resultiert damit auch schon ein vergleichsweise großer Kostenaufwand und ein vergleichsweise großer Bauraumbedarf. Auch besteht wenig Spielraum hinsichtlich Werkstoffauswahl und in Frage kommender Fertigungsverfahren. Betreffend die ansteuernde Hydraulik sind sehr hohe Sauberkeitsanforderungen und Genauigkeitsanforderungen an die Kanäle und Oberflächen zu erfüllen. Ist die ansteuernde Hydraulik teilweise oder vollständig in mehrfach funktionale Bauteile integriert, so gilt dies für solche Bauteile, die ansonsten etwa nur dem hinsichtlich der Sauberkeit und Genauigkeit nicht ganz so anspruchsvollen Kühlkreislauf zugeordnet sind, insgesamt. Alle diese Rahmenbedingungen erhöhen die Kosten und den Aufwand.

Demgegenüber ist es eine Aufgabe der Erfindung, eine Mehrfachkupplungseinrichtung der angesprochenen Art bereitzustellen, die strukturell weniger komplex ist und damit die angesprochenen Nachteile des Stands der Technik zumindest zum Teil vermeidet.

Diese Aufgabe wird durch die kennzeichnenden Merkmale von Anspruch 1 gelöst.

Zur Lösung dieser Aufgabe wird für die eingangs identifizierte Mehrfachkupplungseinrichtung, insbesondere Doppelkupplungseinrichtung, erfindungsgemäß vorgeschlagen, dass zum Betätigen wenigstens einer der Lamellen-Kupplungsanordnungen wenigstens einer der Lamellenträger zumindest an einem Innenlamellen eines der Lamellenpakete zugeordneten Innenlamellentragabschnitt oder zumindest an einem Außenlamellen eines der Lamellenpakete zugeordneten Außenlamellentragabschnitt axial verstellbar ist.

Die Betätigung wenigstens einer, ggf. mehrerer (im Falle einer DoppelKupplungseinrichtung vorzugsweise beider) Lamellen-Kupplungsanordnungen mittels eines zugeordneten Lamellenträgers der Lamellenträger vermeidet, dass zur Betätigung ein gesonderter Betätigungskolben erforderlich ist, der an bzw. relativ zu den übrigen Komponenten der Kupplungseinrichtung geführt sein müsste und eines in die Kupplungskonstruktion integrierten hydraulischen Nehmerzylinders bedürfte. Im Falle einer hydraulischen Betätigung mittels des Lamellenträgers ist natürlich auch ein hydraulischer Nehmerzylinder, ggf. Hochdruckzylinder, erforderlich, der aber gegenüber den zentralen Bestandteilen der Mehrfachkupplungseinrichtung auch separat angeordnet sein könnte und somit nicht zwingend ins "Zentrum" der Mehrfachkupplungseinrichtung integriert sein muss. Es kann beispielsweise eine separat unter den erforderlichen Sauberkeitsbedingungen herstellbare, mit den übrigen Komponenten der Kupplungseinrichtung erst nach deren Herstellung kombinierbare Hydraulikeinheit vorgesehen werden. Eine solche Hydraulik-Einheit kann vorteilhaft vollständig oder teilweise aus Kunststoff hergestellt sein, auch wenn die übrigen wesentlichen Strukturkomponenten der Kupplungseinrichtung aus üblichen Metallmaterialien hergestellt sind.

Erfindungsgemäß wird ausgangsseitig ein der ersten Lamellen-Kupplungsanordnung zugehöriger ersten Lamellenträger und ein der zweiten Lamellen-Kupplungsanordnung zugehöriger zweiter Lamellenträger vorgesehen sein. Es wird etwa daran gedacht, dass der erste Lamellenträger als Außenlamellenträger und der zweite Lamellenträger als Innenlamellenträger ausgeführt ist.

Erfindungsgemäß wird nach einer ersten Ausgestaltungsmöglichkeit vorgeschlagen, dass von dem ersten und dem zweiten Lamellenträger wenigstens einer zur Betätigung der zugeordneten Lamellen-Kupplungsanordnung axial verstellbar ist. Bevorzugt sind beide Lamellenträger axial verstellbar, um die jeweilige Lamellen-Kupplungsanordnung betätigen zu können.

Auf Basis des erfindungsgemäßen konstruktiven Ansatzes ergeben sich überdies viele weitere konstruktive Möglichkeiten, die zu weiteren Vorteilen führen, wie im Folgenden deutlich werden wird.

Vorteilhaft kann man vorsehen, dass der axial verstellbare Lamellenträger mit einem zugeordneten, gegenüber dem Lamellenträger gesonderten Ausgangselement drehfest verbunden und zur Betätigung der zugeordneten Lamellen-Kupplungsanordnung gegenüber dem Ausgangselement axial verstellbar ist. In diesem Zusammenhang ist es bevorzugt, dass der Lamellenträger mittels einer die axiale Verstellbarkeit gebenden axialen Relativverschiebeeinrichtung mit dem Ausgangselement verbunden und radial an diesem abgestützt ist.

Alternativ wird nach einer zweiten Ausführungsmöglichkeit weiterbildend vorgeschlagen, dass von dem ersten und dem zweiten Lamellenträger wenigstens einer einen radial äußeren, den Innenlamellentragabschnitt bzw. Außenlamellentragabschnitt aufweisenden Abschnitt aufweist, der zur Betätigung der zugeordneten Lamellen-Kupplungsanordnung gegenüber einem radial inneren Abschnitt des Lamellenträgers axial verstellbar ist. Dabei kann vorteilhaft der radial innere Abschnitt des Lamellenträgers das Ausgangselement bilden oder dieses aufweisen. Das Ausgangselement kann beispielsweise ein Nabenelement umfassen, welches drehfest mit einer zugeordneten Getriebeeingangswelle der Getriebeanordnung gekoppelt oder koppelbar ist.

Weiterbildend wird als besonders bevorzugt vorgeschlagen, dass der radial innere und der radial äußere Abschnitt des Lamellenträgers durch einen axial elastischen Verbindungsabschnitt des Lamellenträgers drehfest und radial abstützend verbunden sind. Vorteilhaft kann man in diesem Zusammenhang vorsehen, dass der Verbindungsabschnitt eine Federanordnung, vorzugsweise eine Fächerscheibenanordnung oder eine Blattfederanordnung, aufweist.

Allgemein wird betreffend die Betätigung der Lamellen-Kupplungsanordnung mittels des zugeordneten Lamellenträgers vorgeschlagen, dass der Lamellenträger bzw. der radial äußere Abschnitt des Lamellenträgers zur axialen Verstellung und damit Betätigung der zugeordneten Lamellen-Kupplungsanordnung hydraulisch oder mechanisch betätigbar ist mittels einer vorzugsweise auf Seiten der Getriebeanordnung angeordneten hydraulischen oder mechanischen Betätigungsanordnung. Nach einer besonders bevorzugten Ausgestaltung kann dabei eine direkt oder indirekt an wenigstens einer als Getriebeeingangselement dienenden Getriebeeingangswelle angeordnete Hydraulik-Einheit oder Mechanik-Einheit vorgesehen sein, die wenigstens ein direkt oder indirekt auf den Lamellenträger wirkendes Betätigungselement zur Betätigung des Lamellenträgers bzw. des radial äußeren Abschnitts des Lamellenträgers aufweist. In der Regel werden die Getriebeeingangswellen radial geschachtelt angeordnet sein. In diesem Fall wird daran gedacht, dass die Hydraulik-Einheit oder Mechanik-Einheit an der radial äußeren, als Hohlwelle ausgeführten Getriebeeingangswelle angeordnet ist, direkt oder indirekt vermittels eines Zwischenteils, beispielsweise des Nabenabschnitts des dieser Getriebeeingangswelle zugeordneten Ausgangselements.

Wie schon angedeutet, kann man also vorsehen, dass die Hydraulik-Einheit oder Mechanik-Einheit an einem Nabenabschnitt des Ausgangselements einer der Lamellen-Kupplungsanordnungen angeordnet und vermittels dieses Nabenabschnitts an der zugeordneten einen Getriebeeingangswelle gehalten ist.

Zweckmäßig kann man vorsehen, dass die Hydraulik-Einheit oder Mechanik-Einheit vermittels der Getriebeeingangswelle oder/und vermittels einer Gehäusewandung der Getriebeanordnung axial abstützbar ist, zur Abstützung von bei der Betätigung resultierenden axialen Gegenkräften. Alternativ oder zusätzlich kann man weiterhin vorsehen, dass die Hydraulik-Einheit oder Mechanik-Einheit vermittels der anderen Getriebeeingangswelle der Getriebeanordnung vermittels einer Axiallageranordnung axial abstützbar ist, zur Abstützung von bei der Betätigung resultierenden axialen Gegenkräften. Höchstvorzugsweise stützt sich hierbei die Hydraulik-Einheit oder Mechanik-Einheit am Ausgangselement des der anderen Getriebeeingangswelle zugeordneten Lamellenträgers ab.

Nach einer besonders bevorzugten Ausgestaltung wird vorgeschlagen, dass die Hydraulik-Einheit oder Mechanik-Einheit oder ein das Betätigungselement aufweisender Betätigungsabschnitt derselben sich mit der Getriebeeingangswelle bzw. dem Nabenabschnitt mitdreht.

Betreffend die Zusammenwirkung der Hydraulik-Einheit bzw. Mechanik-Einheit mit den Lamellen-Kupplungsanordnungen wird als besonders zweckmäßig daran gedacht, dass die Hydraulik-Einheit bzw. Mechanik-Einheit wenigstens ein direkt oder indirekt auf den ersten Lamellenträger wirkendes, diesem zugeordnetes erstes Betätigungselement und wenigstens ein direkt oder indirekt auf den zweiten Lamellenträger wirkendes, diesem zugeordnetes zweites Betätigungselement aufweist. Dreht sich die Hydraulik-Einheit bzw. Mechanik-Einheit mit der Getriebeeinheit bzw. dem Nabenabschnitt mit, so kann man vorteilhaft vorsehen, dass nur eines der beiden Betätigungselemente vermittels eines Drehlagers auf den zugeordneten Lamellenträger wirkt. Das Drehlager ist dann nur noch für die Betätigung der anderen Lamellen-Kupplungsanordnung, mit deren Ausgangselement bzw. Getriebeeingangswelle sich die Hydraulik-Einheit bzw. Mechanik-Einheit nicht mitdreht, erforderlich.

Auf das Betätigungselement kann wenigstens ein hydraulischer Nehmerzylinder der Hydraulik-Einheit wirken. Bevorzugt ist der hydraulische Nehmerzylinder als Hochdruckzylinder ausgeführt, so dass der Bauraumbedarf gering ist und unter Umständen auf einen FliehkraftAusgleich verzichtet werden kann. Vorzugsweise ist hierbei der Hochdruckzylinder auf möglichst kleinem Durchmesser angeordnet, damit die Fliehkrafteinflüsse klein gehalten werden können.

Es ist nicht zwingend, aber häufig sehr zweckmäßig, wenn die Lamellen-Kupplungsanordnungen für einen Nasslaufbetrieb vorgesehen sind. Hierzu kann den Lamellen-Kupplungsanordnungen, insbesondere deren Lamellenpakete, Betriebsflüssigkeit, etwa ein Kühlöl, zuführbar sein. Dies kann sehr zweckmäßig von Seiten der Getriebeanordnung erfolgen.

Weiterbildend wird vorgeschlagen, dass die Betriebsflüssigkeit durch wenigstens einen Zufuhrkanal zwischen der Hydraulik-Einheit bzw. Mechanik-Einheit und der Getriebeeingangswelle bzw. dem Nabenabschnitt oder/und zwischen dem Nabenabschnitt und der Getriebeeingangswelle zuführbar ist.

Eine sehr zweckmäßige, weil kompakte und mit wenigen Bauteilen auskommende Ausführungsform zeichnet sich dadurch aus, dass eingangsseitig ein der ersten Lamellen-Kupplungsanordung und der zweiten Lamellen-Kupplungsanordnung gemeinsam zugehöriger dritter Lamellenträger vorgesehen ist. In diesem Zusammenhang wird als besonders bevorzugt vorgeschlagen, dass der dritte Lamellenträger als Innenlamellenträger für die erste Lamellen-Kupplungsanordnung und Außenlamellenträger für die zweite Lamellen-Kupplungsanordnung dient.

Der dritte Lamellenträger kann sehr vorteilhaft mit einer Eingangswelle oder Eingangsnabe der Eingangsseite eine Baueinheit bilden. Der Lamellenträger und die Eingangswelle bzw. Eingangsnabe können gesonderte, zu der Baueinheit zusammengefügte Bauteile sein oder von Abschnitten eines einteiligen Bauteils gebildet sein.

Vorteilhaft kann man vorsehen, dass wenigstens eine Komponente der Eingangsseite mittels wenigstens eines Drehlagers axial oder/und radial an wenigstens einer benachbarten Komponente der Ausgangsseite abgestützt oder abstützbar ist. Beispielsweise kann man vorsehen, dass die Eingangsnabe bzw. Eingangswelle mittels wenigstens eines Drehlagers radial oder/und axial an einem axial benachbarten Lamellenträger vom ersten und zweiten Lamellenträger oder dem diesem zugeordneten Ausgangselement, vorzugsweise dessen Nabenabschnitt, abgestützt oder abstützbar ist. Eine weitere zweckmäßige Möglichkeit ist, dass der dritte Lamellenträger mittels wenigstens eines Drehlagers radial oder/und axial an einem axial benachbarten Lamellenträger vom ersten und zweiten Lamellenträger oder dem diesem zugeordneten Ausgangselement, vorzugsweise dessen Nabenabschnitt, abgestützt oder abstützbar ist. Zweckmäßig kann eine axiale Abstützung derart realisiert sein, dass bei der Betätigung resultierende axiale Kräfte abgestützt werden. Man kann eine axiale Abstützung in beide axiale Richtungen vorsehen.

An einem Außenumfang der Eingangswelle bzw. Eingangsnabe kann zweckmäßig eine Mitnahmeformation vorgesehen sein, mittels der eine direkte oder indirekte Drehmomentübertragungsverbindung zu dem Abtriebselement der Antriebsordnung hergestellt oder herstellbar ist.

Die Eingangsseite bzw. deren Eingangswelle bzw. Eingangsnabe kann alleine vermittels der benachbarten, ausgangsseitigen Komponente bzw. Komponenten der Mehrfachkupplungseinrichtung getriebeanordnungsseitig gelagert sein. Es ist aber sehr zweckmäßig, wenn zusätzlich oder alternativ eine antriebsanordnungsseitige Lagerung realisiert ist. Hierzu wird vorgeschlagen, dass die Eingangswelle bzw. Eingangsnabe mittels wenigstens eines Drehlagers auf Seiten der Antriebsanordnung axial oder/und radial gelagert oder lagerbar ist. Es kann beispielsweise ein PilotLager realisiert sein.

Vorteilhaft kann man vorsehen, dass wenigstens einer der Lamellenträger oder/und wenigstens eines der Ausgangselemente vermittels eines zugeordneten Getriebeeingangselements (insbesondere Getriebeeingangswelle) axial abgestützt oder abstützbar sind. Zweckmäßig kann so eine Abstützung der Kupplungseinrichtung oder zumindest deren Ausgangsseite in beide Axialrichtungen realisiert sein, wobei bevorzugt in einer der Axialrichtungen eine elastische Abstützung vorgesehen sein kann, etwa in Richtung zur Antriebsanordnung. Die Abstützung kann hierbei alternativ oder zusätzlich mittels Einstellelementen wie zum Beispiel Einstellscheiben axial einstellbar ausgeführt sein.

Allgemein kann man zweckmäßig vorsehen, dass die Mehrfachkupplungseinrichtung als vormontierte Baueinheit ohne vorherige Demontage in einem Antriebsstrang zwischen der Antriebseinheit und der Getriebeanordnung montierbar ist, gewünschtenfalls in einem geschlossenen Kupplungsgehäuse.

Die Erfindung wird im Folgenden anhand von in den Figuren gezeigten Ausführungsbeispielen näher erläutert.
- Fig. 1: zeigt ein erstes Ausführungsbeispiel einer erfindungsgemäßen Doppelkupplung.
- Fig. 2a: zeigt ein zweites Ausführungsbeispiel einer erfindungsgemäßen Doppelkupplung, welche sich durch die Art und Weise der axialen Abstützung einer Eingangsseite der Doppelkupplung vom Ausführungsbeispiel der Fig. 1 unterscheidet.
- Fig. 2b: zeigt ein drittes Ausführungsbeispiel einer erfindungsgemäßen Doppelkupplung, welche sich durch die Art und Weise der axialen Abstützung einer Ausgangsseite der Doppelkupplung vom Ausführungsbeispiel der Fig. 2a unterscheidet.

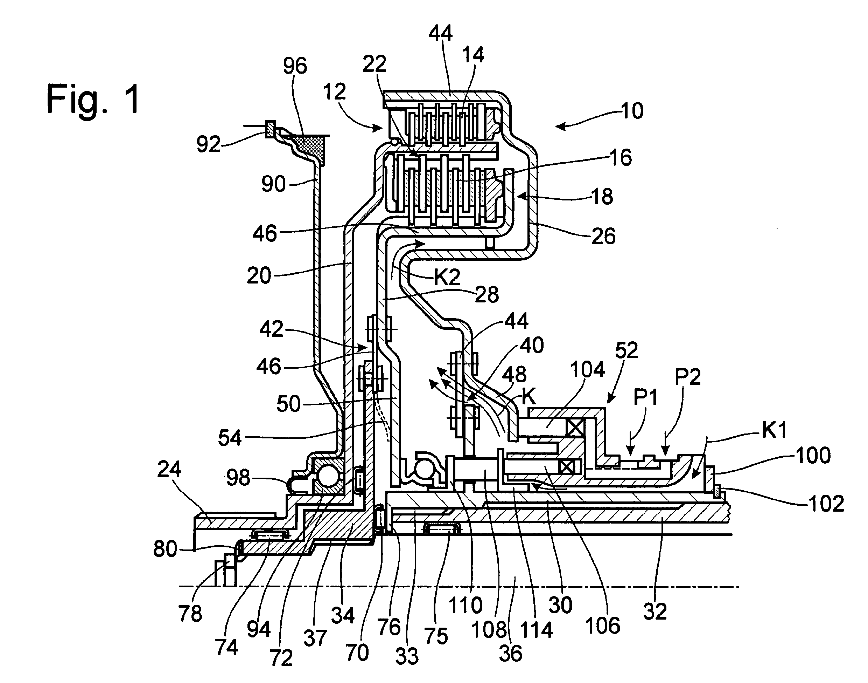

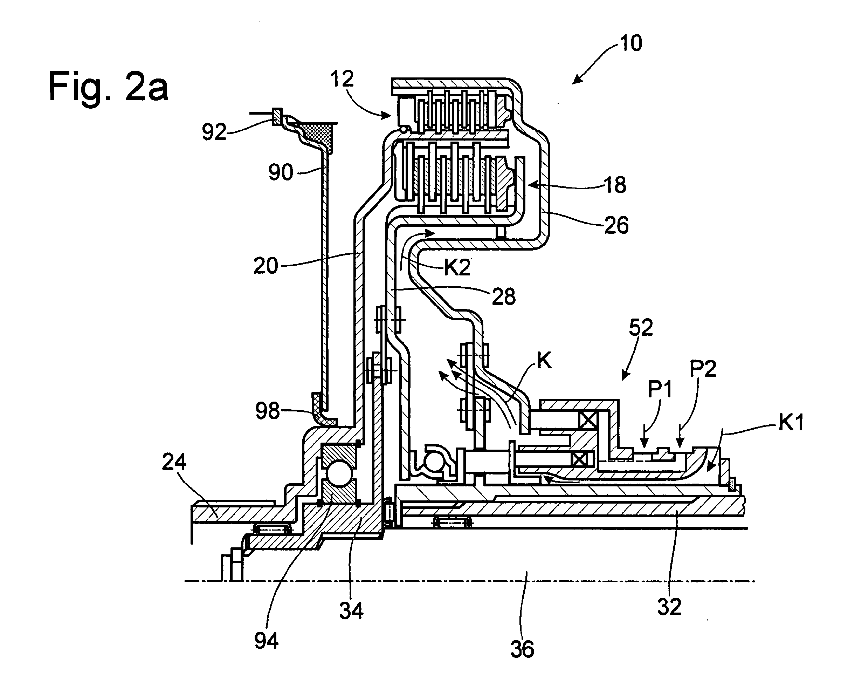

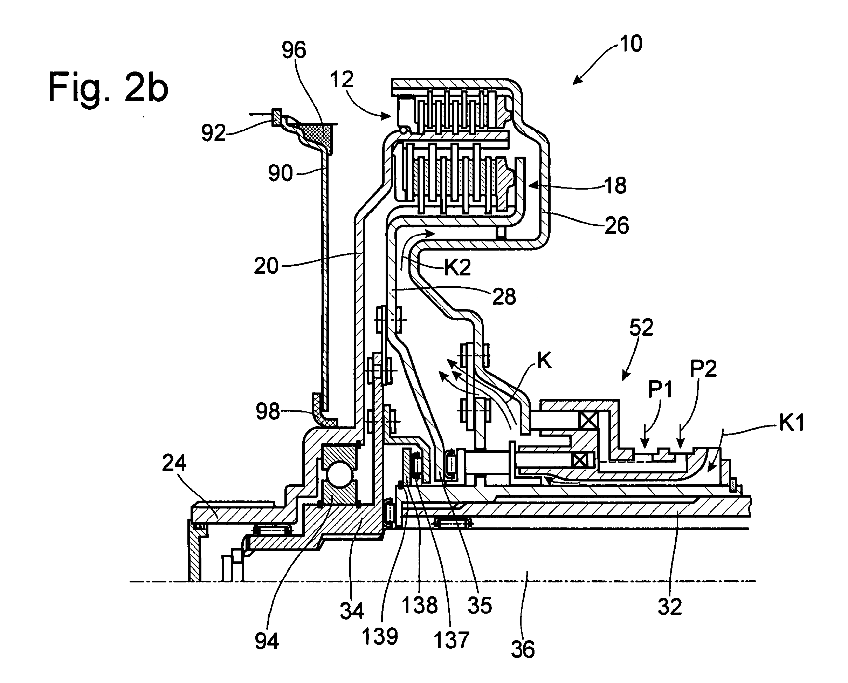

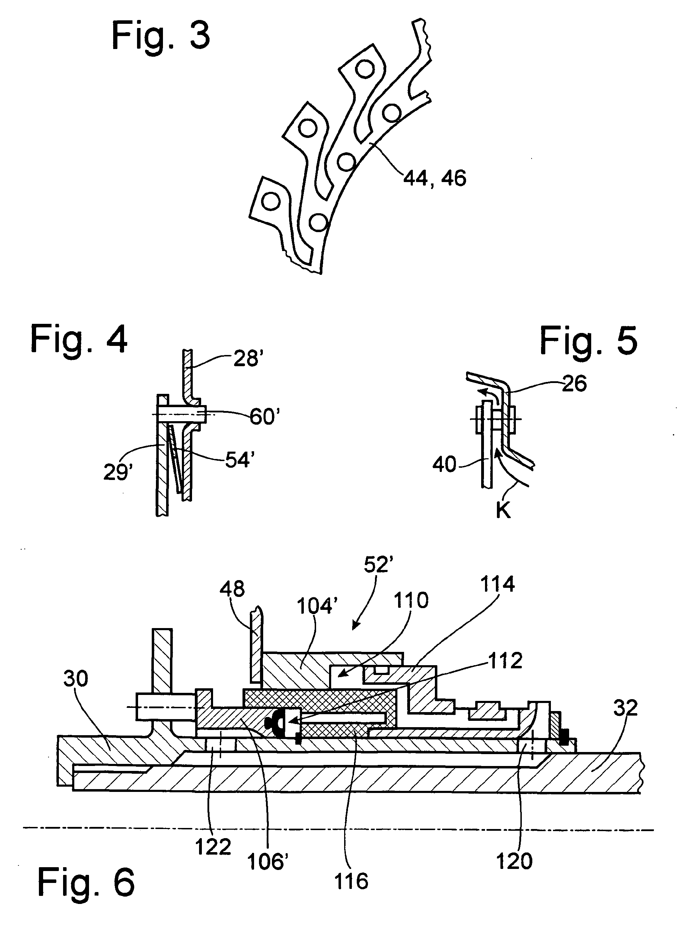

- Fig. 3: zeigt schematisch ein Beispiel eines als so genannte "Fächerscheibe" ausgeführten federnden Rings als Beispiel für eine bevorzugte Möglichkeit der Realisierung einer axialen Verstellbarkeit eines radial äußeren Lamellenträgerabschnitts gegenüber einem radial inneren Lamellenträgerabschnitt der ausgangsseitigen Lamellenträger der Doppelkupplungen nach Fig. 1 und Fig. 2a/b. Fig.4 zeigt ein Beispiel für eine mechanische Relativverschiebeeinrichtung, mit der ein Lamellenträger gegenüber einem damit drehfest verbundenen Ausgangselement axial verschiebbar und an dem Ausgangselement radial abstützbar ist und welches bei einem oder beiden Lamellenträgern der Ausführungsform der Fig. 1 und 2a/b anstelle der Fächerscheiben der Fig. 3 zum Einsatz kommen könnte.
- Fig.5: zeigt eine Möglichkeit, wie etwa im Falle des Einsatzes der Fächerscheibe ein alternativer oder zusätzlicher Kühlöldurchlass nach radial außen realisiert sein könnte.
- Fig. 6: zeigt eine bei den Ausführungsformen der Fig. 1 und 2a/b alternativ einsetzbare Hydraulikeinheit mit Hydraulik- Stufenzylindern.
- Fig. 7: bezieht sich auf die Ausführungsform der Fig. 1 und zeigt eine alternative Ausgestaltung der Eingangsseite der Doppelkupplung für eine Pilot-Lagerung auf Seiten einer Antriebseinheit.
- Fig. 8: bezieht sich auf die Ausführungsform der Fig. 2a/b und zeigt eine alternative Ausgestaltung der Eingangsseite der Doppelkupplung für eine Pilot-Lagerung auf Seiten einer Antriebseinheit.
- Fig. 9: bezieht sich auf Fig. 1 und zeigt, wie eine radial innere von zwei geschachtelten Getriebeeingangswellen für eine Pilot-Lagerung auf Seiten einer Antriebseinheit ausgeführt sein könnte.
- Fig. 10: bezieht sich auf Fig. 2a/b und zeigt, wie eine radial innere von zwei geschachtelten Getriebeeingangswellen für eine Pilot- Lagerung auf Seiten einer Antriebseinheit ausgeführt sein könnte.

Fig. 1 zeigt ein Ausführungsbeispiel für eine erfindungsgemäße Doppelkupplungseinrichtung, im Folgenden kurz Doppelkupplung, mit zwei bevorzugt nasslaufenden Lamellen-Kupplungsanordnungen, im Folgenden kurz auch als Lamellenkupplung angesprochen werden. Die Doppelkupplung 10 weist eine erste Lamellenkupplung bzw. Lamellen-Kupplungsanordnung 12 auf, deren Lamellenpaket 14 ein Lamellenpaket 16 einer zweiten Lamellenkupplungsanordnung bzw. Lamellenkupplung 18 radial außen umgibt. Die beiden Lamellenkupplungen weisen einen gemeinsamen eingangsseitigen Lamellenträger 20 auf, der als Innenlamellenträger des Lamellenpakets 14 der ersten Lamellenkupplung 12 und als Außenlamellenträger des Lamellenpakets 16 der zweiten Lamellenkupplung 18 dient. Hierzu weist der Lamellenträger 20 einen Lamellentragabschnitt 22 auf, welcher radial außen eine axiale Verschiebbarkeit ermöglichende Mitnahmeformationen für die Innenlamellen des Lamellenpakets 14 und radial innen eine axiale Verschiebbarkeit ermöglichende Mitnahmeformationen für die Außenlamellen des Lamellenpakets 16 aufweist.

Der gemeinsame Lamellenträger 20 ist integral, im Falle des Ausführungsbeispiels einteilig mit einem Eingangsflansch 24 ausgeführt, welcher an einem Außenumfang Drehmitnahmeformationen zur Einleitung eines Drehmoments in die Eingangsseite der Doppelkupplung aufweist. Beispielsweise kann mit einer Ausgangsseite eines Torsionsschwingungsdämpfers oder Zwei-Massen-Schwungrad ein Drehmitnahmeeingriff hergestellt sein, dessen/deren Eingangsseite mit einer Abtriebswelle einer beispielsweise als Brennkraftmaschine ausgeführten Antriebseinheit drehgekoppelt ist.

Ein zur ersten Lamellenkupplung 12 zugehöriger Außenlamellenträger 26 und ein zur zweiten Lamellenkupplung 18 zugehöriger Innenlamellenträger 28 gehören zur Ausgangsseite der Doppelkupplung und weisen jeweils ein mit einer zugeordneten Getriebeeingangswelle einer axial benachbarten Getriebeanordnung drehgekoppeltes Ausgangselement auf. Das Ausgangselement der ersten Lamellenkupplung 12 weist eine Ausgangsnabe 30 auf, welches radial außen auf einer als Hohlwelle ausgeführten ersten Getriebeeingangswelle 32 sitzt und mit dieser mittels Keilverzahnungen 33 zur gemeinsamen Drehung verbunden ist. Das Ausgangselement der zweiten Lamellenkupplung 18 umfasst eine Ausgangsnabe 34, die radial außen auf einer sich durch die Hohlwelle erstreckenden, als Vollwelle ausgeführten zweiten Getriebeeingangswelle 36 sitzt und mit dieser über Keilverzahnungen 37 zur gemeinsamen Drehung verbunden ist.

In Abweichung von herkömmlichen Doppelkupplungen weist die Doppelkupplung keine Kolben zur Ansteuerung der Lamellenpakete auf. Stattdessen erfolgt die Ansteuerung, d. h. Betätigung im Sinne eines Einrückens und Ausrückens, der Lamellenpakete mittels des jeweiligen ausgangsseitigen Lamellenträgers 26 bzw. 28. Hierzu weisen die beiden Lamellenträger jeweils einen axial elastischen Verbindungsabschnitt 40 bzw. 42 auf, welcher einen aufgrund dieser axialen Elastizität axial beweglichen, einen Lamellentragabschnitt 44 aufweisenden radial äußeren Abschnitt des Lamellenträgers 26 mit einem radial inneren, als Ausgangselement dienenden und die Ausgangsnabe 30 aufweisenden Abschnitt des Lamellenträgers 26 verbindet bzw. einen aufgrund dieser axialen Elastizität axial beweglichen, einen Lamellentragabschnitt 46 aufweisenden radial äußeren Abschnitt des Lamellenträgers 28 mit einem radial inneren, als Ausgangselement dienenden und die Ausgangsnabe 34 aufweisenden Abschnitt des Lamellenträgers 28 verbindet.

Bevorzugt kommt zur Bereitstellung der axialen Elastizität ein axial elastischer Federring etwa in Form einer so genannten Fächerscheibe wie in Fig. 3 dargestellt zum Einsatz, die in Fig. 1 mit 44 bzw. 46 bezeichnet ist und radial innen mit einem Flanschabschnitt des betreffenden Ausgangselements und radial außen mit dem axial beweglichen Lamellenträgerabschnitt verbunden, beispielsweise vernietet ist. Ein jeweiliger Betätigungsabschnitt 48 bzw. 50 des axial beweglichen Lamellenträgerabschnitts ist nach radial innen geführt in den axialen Wirkungsbereich von Betätigungselementen einer hydraulische Nehmerzylinder aufweisenden Hydraulikeinheit 52. Anstelle einer Fächerscheibe können auch andere Federeinrichtungen, etwa mehrere Einzelblattfedern oder dergleichen, vorgesehen werden.

Die axial elastischen Verbindungsabschnitte 40 und 42 sollten so ausgeführt und in den jeweiligen Lamellenträger integriert sein, dass Schnappeffekte nicht auftreten und keine übermäßigen, durch die hydraulische Ansteuerung nicht beherrschbare Rückstellkräfte entstehen. Das gilt sowohl für eine ohne weiteres mögliche Zugbetätigung als auch für die in Fig. 1 dargestellte Schubbetätigung. Im Falle der Schubbetätigung, bei der auf die axial beweglichen Lamellenträgerabschnitte im Sinne eines Einrückens wirkende Druckkräfte ausgeübt werden, kann eine axiale Rückstellung durch axiale Rückstellkräfte des axial elastischen Verbindungsabschnitts 40 bzw. 42 selbst erfolgen. Alternativ oder zusätzlich können axiale Rückstellkräfte durch eine jeweilige Rückstellfederanordnung, beispielsweise eine jeweilige Membranfeder, bzw. Tellerfeder aufgebracht werden, die etwa zwischen dem axial festen und dem axial beweglichen Lamellenträgerabschnitt wirkt, wie dies für den Innenlamellenträger 28 der zweiten Lamellenkupplung durch eine gestrichelt eingezeichnete Membranfeder 54 in Fig. 1 angedeutet ist. Eine derartige oder anders ausgestaltete Rückstellfederanordnung könnte auch zwischen dem axial festen und dem axial beweglichen Abschnitt des Außenlamellenträgers 26 der ersten Lamellenkupplung 12 realisiert sein.

Weiterhin sollten die axial elastischen Verbindungsabschnitte 40 und 42 so ausgeführt und in den jeweiligen Lamellenträger integriert sein, dass unerwünschte Effekte, wie Drehmomentschwankungen aufgrund wechselnder Betriebszustände des Fahrzeugs, wie ein Wechsel von einem Zugfahrbetrieb (Motor zieht das Fahrzeug) in einen Schubbetrieb (Fahrzeug schiebt den Motor) nicht auftreten.

Für die Realisierung der axial federnden Verbindungsabschnitte ist es bevorzugt, dass die federnden Elemente bei geschlossener Lamellenkupplung, also in momentenübertragender Position, hinsichtlich wirkender Axialkräfte eine Neutralstellung einnehmen, in der aus der Drehmomentübertragung keine axialen Kräfte resultieren. Eine solche Neutralstellung ist beispielsweise in einem Zustand der Fächerscheibe 44 bzw. 46 realisiert, in der die Fächerscheibe plan ist. Die angesprochene Neutralstellung ist von einer relaxierten bzw. maximal relaxierten Stellung im ausgerückten Zustand der betreffenden Lamellenkupplung zu unterscheiden.

Eine solche ggf. plane Neutralstellung kann insbesondere bei Nasslaufkupplungen mit sehr geringen Verschleißwegen durch Auslegung und Einstellung im Neuzustand sichergestellt werden. Es können aber auch an sich bekannte Lösungen zur Verschleißwegkompensation eingesetzt werden.

Eine Alternative zu einer axial elastischen Ausführung des Lamellenträgers ist die Ausführung des jeweiligen Lamellenträgers mit einer axialen Relativverschiebeeinrichtung, die eine verdrehfeste, jedoch axial verschiebbare Mitnahme zwischen dem Lamellenträger bzw. dessen den Lamellentragabschnitt aufweisenden radial äußeren Abschnitt und einem gegenüber dem Lamellenträger gesonderten Ausgangselement bzw. einem das Ausgangselement aufweisenden radial inneren Abschnitt des Lamellenträgers vorsieht.

Fig. 4 zeigt exemplarisch eine solche alternative Ausführungsmöglichkeit, die aufgrund ihrer Reibungsbehaftung gegenüber der axial elastischen Ausführung nicht unbedingt favorisiert wird. Es ist letztlich egal, ob man das Ausgangselement als einen Bestandteil des Lamellenträgers ansieht oder als ein gegenüber dem Lamellenträger gesondertes Element. Im Falle der Fig. 4 ist davon ausgegangen, dass 28' den dem Lamellenträger 28 der zweiten Lamellenkupplungsanordnung entsprechenden ausgangsseitigen Innenlamellenträger bezeichnet, der mit einem Flanschabschnitt eines die Ausgangsnabe 34 aufweisenden Ausgangselement 29' der zweiten Lamellenkupplung drehfest, aber axial verschieblich gekoppelt ist, wobei die Kopplung durch in Öffnungen des Lamellenträgers eingreifende Mitnahmebolzen 60' des Ausgangselements 29' realisiert ist. Zur Bereitstellung axialer Rückstellkräfte wirkt zwischen dem Ausgangselement 29' und dem Lamellenträger 28' eine Membranfeder 54'. In entsprechender Weise kann auch der Innenlamellenträger der ersten Lamellenkupplungsanordnung mit einem Ausgangselement gekoppelt sein, welches die Ausgangsnabe 30 aufweist. Durch die axiale Relativverschiebeeinrichtung ist der jeweilige Lamellenträger gegenüber dem betreffenden Ausgangselement axial verstellbar und radial an dem Ausgangselement abgestützt.

Gemäß dem erfindungsgemäßen Kupplungsbetätigungskonzept ist die Funktion herkömmlicher, beispielsweise als große Blechkolben ausgeführter Betätigungskolben dadurch ersetzt, dass ein jeweiliger Lamellenträger, im Falle der Ausführungsbeispiele die beiden ausgangsseitigen Lamellenträger oder zumindest ein jeweiliger radial äußerer, den Lamellentragabschnitt aufweisender Abschnitt des Lamellenträgers axial beweglich angebunden bzw. geführt ist und die Funktion "Lamellenpaket einspannen" mit übernimmt und hierzu mit dem jeweils anderen, als Gegenlager dienenden Lamellenträger zusammenwirkt. Das Schließen der Lamellenkupplung erfolgt also durch axiales Aufeinanderzufahren des sekundärseitigen Lamellenträgers bzw. dessen den Lamellentragabschnitt aufweisenden radial äußeren Tragabschnitt in Richtung zum primärseitigen Lamellenträger.

Im Falle des Ausführungsbeispiels erfolgt die Betätigung für die erste Lamellenkupplung 12 mittels des ausgangsseitigen Außenlamellenträgers und für die zweite Lamellenkupplung 18 mittels des ausgangsseitigen Innenlamellenträgers, so dass eine ungerade Reibflächenzahl wirksam wird. Beim dargestellten Beispiel gleitet also bei beiden Lamellenkupplungen jeweils die rechte Reibfläche der rechten Reiblamelle nicht, so dass stattdessen auch eine einseitige Lamelle ("single sided" Lamelle) eingesetzt werden könnte. Alternativ kann auch das gesamte Lamellenpaket mit singlesided Lamellen ausgeführt sein.

Auf noch zu beschreibende Art und Weise wird den Lamellenpaketen Kühlöl von radial innen zugeführt aus Richtung der Hydraulikeinheit 52. Der Kühlölfluss kann zweckmäßig durch die Öffnungen und Aussparungen der Fächerscheibe 44 erfolgen, wie in Fig. 1 durch Pfeile K angedeutet. Alternativ oder zusätzlich kann man auch radiale Durchlässe zwischen der Fächerscheibe und dem radial äußeren Abschnitt des Lamellenträgers 26 vorsehen, wie in Fig. 5 veranschaulicht. In ähnlicher Weise könnte im Falle einer Ausgestaltung in die Fig. 4 das Kühlöl zwischen dem Ausgangselement und dem Lamellenträger, durch Durchlassöffnungen der ggf. vorgesehenen Membranfeder hindurch, erfolgen.

Die Grundstruktur der erfindungsgemäßen Ausführungsbeispiele ist damit im Wesentlichen beschrieben. Das Antriebsdrehmoment tritt von einem Motor, ggf. über einen Torsionsschwingungsdämpfer oder ein Zwei-Massen-Schwungrad (ZMS), in an sich bekannter Weise über eine Eingangswelle bzw. eine Eingangsnabe, hier gebildet von dem Eingangsflansch 24, in die Doppelkupplung ein und wird von hier ggf. über eine Schweißnaht zum primärseitigen Lamellenträger 20 weitergeleitet. Im Falle eines Torsionsschwingungsdämpfers bzw. ZMS im Nassraum könnte der primärseitige Lamellenträger (Eingangslamellenträger) auch eine Einheit mit dem Ausgang des Torsionsschwingungsdämpfers bzw. ZMS bildend, beispielsweise die ZMS-Sekundärmasse bilden oder dieser zugehören. Der primärseitige Lamellenträger weist am Lamellentragabschnitt jeweils nach radial außen und nach radial innen ein solches Profil auf, dass das Moment sowohl nach radial außen als auch nach radial innen in die beiden Lamellenpakete der beiden Lamellenkupplungen weitergeleitet werden kann. Eine bei herkömmlichen Doppelkupplungen in der Regel realisierte Durchleitung des Eingangsmoments über weitere Bauteile, beispielsweise von dem Lamellenträger der einen Lamellenkupplungsanordnung zu einem Lamellenträger der anderen Lamellenkupplungsanordnung, ist vermieden und es gibt keine Drehmomentübertragung über eine drucköl- oder/und kühlölzuführende, typischerweise der Eingangsseite zugehörige Ölnabe.

Bei den erfindungsgemäßen Ausführungsbeispielen ist ausweislich den Fig. 1 und 2a/b ein sehr zweckmäßiges radiales und axiales Lagerkonzept realisiert. Die Doppelkupplung ist sekundärseitig gelagert, indem sie mit der Ausgangsnabe 30 der ersten Lamellenkupplung 12 auf die als Hohlwelle ausgeführte erste Getriebeeingangswelle 32 aufgesteckt ist und mit dieser auf deren Lagern umläuft. In entsprechender Weise ist die Ausgangsnabe 34 der zweiten Lamellenkupplung 18 auf die als Vollwelle ausgeführte, radial innen liegende zweite Getriebeeingnagswelle 36 aufgesteckt und durch Nadellager 70 und 72 axial zwischen der Ausgangsnabe 30 und der Eingangsnabe 24 bzw. dem gemeinsamen Lamellenträger 20 axial geführt. Zwischen der Ausgangsnabe 34 und der den Eingangsflasch aufweisenden Eingangsnabe 24 ist ferner ein Nadellager 74 radial wirksam.

Die Ausgangsnabe 30 schlägt mit einem nach radial innen vorstehenden Flansch 76 in Richtung zur Getriebeanordnung gegen ein Ende der ersten Getriebeeingangswelle 32 an. Zwischen einem Sprengring 78 in einer Nut der inneren Getriebeeingangswelle 36 und einem Ringende der Ausgangsnabe 34 ist ein Federring 80 eingefügt, der die Ausgangsnabe 34 elastisch zur Getriebeanordnung drückt. Hierdurch werden die bei Lastwechseln auftretenden geringfügigen axialen Verschiebungen der beiden Wellen zueinander zugelassen. Aufgrund des Axiallagers 70 zwischen den beiden Ausgangsnaben wird damit auch die Ausgangsnabe 30 in Richtung zur Getriebeanordnung und damit der Anschlagflansch 76 gegen das Ende der Getriebeeingangswelle 32 gedrückt. Damit ist die gesamte Ausgangsseite der Doppelkupplung, abgesehen von der axialen Verstellbarkeit der ausgangsseitigen Lamellenträgern bzw. deren radial äußeren, die Lamellentragabschnitte aufweisenden Abschnitte, axial fixiert. Anstelle einer axial elastischen Abstützung am Sprengring 78 kann die Ausgangsnabe 34 auch durch eine oder mehrere Einstellscheiben starr am Sprengring 78 in Richtung zur Antriebseinheit axial abgestützt sein. Bei dieser Ausgestaltung ist ein lastwechselabhängiges axiales Verschieben der Wellen zueinander entsprechendes Einstellspiel zu berücksichtigen. Nach erfolgter Montage der Kupplung auf die Wellen und Einsetzen des Sprengringes 78 wird die Eingangsnabe 24 noch mit einem dichtenden Deckel in Richtung Antriebseinheit versehen.

Die Eingangsseite ist vermittels des axial wirksamen Nadellagers 72 und des Radiallagers 74 radial geführt und axial in Richtung zur Getriebeanordnung abgestützt. Eine axiale Abstützung in Richtung zur Antriebseinheit, also von der Getriebeanordnung weg (in Fig. 1 und Fig. 2a/b nach links) erfolgt im Falle der Ausführungsform der Fig. 1 mittels eines einen die Doppelkupplung 10 enthaltenden Nassraum in Richtung zur Antriebseinheit verschließenden Deckels 90, der beispielsweise eine Getriebegehäuseglocke eines Getriebegehäuses verschließt und an einem Innenumfang der Gehäuseglocke durch einen Haltering 92 axial in Richtung zur Antriebseinheit abgestützt ist und radial außen und radial innen abgedichtet ist. Der Deckel 90 kann auch ein gegenüber dem Getriebegehäuse gesondertes Kupplungsgehäuse abdichtend verschließen oder eine Gehäuseglocke eines Gehäuses der Antriebseinheit. Radial innen ist zwischen dem Deckel 90 und der Eingangsnabe 24 bzw. dem Lamellenträger 20 ein Drehlager 94 axial und auch radial abstützend wirksam, so dass auch die Eingangsseite der Doppelkupplung eine definierte Axialposition einnimmt.

Im Hinblick auf die sekundärseitige Lagerung der Doppelkupplung vor allem mittels der als Hohlwelle ausgeführten ersten Getriebeeingangswelle 32 kann zwischen den beiden Getriebeeingangswellen ein weiteres Drehlager 75 vorgesehen sein, welches ebenfalls vorzugsweise als Nadellager ausgeführt ist.

Gegenüber Fig. 1 unterscheidet sich die Ausführungsform der Fig. 2a/b alleine dadurch, dass das zuletzt angesprochene Drehlager 94 nicht zwischen dem Deckel 90 und der Eingangsnabe 24 bzw. dem gemeinsamen Lamellenträger 20 wirksam ist, sondern zwischen der Eingangsnabe 24 bzw. den Lamellenträger 20 und der Ausgangsnabe 34 der zweiten Lamellenkupplung 18. Das Drehlager 94 weist einen radial inneren und einen radial äußeren Lagerring auf, die in Bezug auf beide axiale Richtungen an der Eingangsnabe 24 bzw. einem radial inneren Abschnitt des Lamellenträgers 20 und an der Ausgangsnabe 34 festgelegt sind, durch Halteringe bzw. Anschlag an dem betreffenden Element selbst. Der Deckel 90 hat somit nur noch eine verschließende bzw. abdichtende Funktion. Jeweilige Abdichtelemente sind in Fig. 1 und Fig. 2 mit 96 und 98 bezeichnet.

Ausweislich der Fig. 1 und 2a ist das die Axialkraftabstützung aus den Lamellenpaketen übernehmende Drehlager 94, welches über den Deckel 90 zum Gehäuse (Fig. 1) bzw. von der Eingangsnabe 24 zur Ausgangsnabe 34 der radial inneren (zweiten) Lamellenkupplung 18 (Fig. 2a) axial abstützt, als Wälzlager, speziell Kugellager ausgeführt. Vorteilhaft kann stattdessen ein jeweiliges Axialnadellager zum Einsatz kommen. Im Falle der Ausführungsform der Fig. 2a entfällt das nach Fig. 1 vorgesehene, nur eine axiale Abstützung in einer Richtung gebende Axiallager 72. Die axiale Kupplungsbetätigungskraft stützt sich in den Ausführungsformen der Fig. 1 und 2a weiterhin jeweils vom Lamellenpaket ausgehend über den Eingangslamellenträger nach radial innen geleitet auf der inneren Getriebeeingangswelle ab. Der Kraftfluss ist somit erst über das Getriebe geschlossen. Bei Betätigung der Lamellenpakete erfährt die äußere Getriebeeingangswelle eine Kraft in Richtung Getriebe und die innere Getriebeeingangswelle eine Kraft in Richtung Antriebseinheit.

In Figur 2b ist am Ausgangselement 34 ein weiteres Bauteil 35 angeordnet, welches sich über ein Axiallager, hier als Nadellager 137 ausgeführt, über das Bauteil 138 und den Sicherungsring 139 an der Ausgangsnabe 30 abstützt. Hierdurch wird die Axialkraftabstützung bei Betätigung der Kupplung über die Bauteile 35, das Lager 137, das scheibenartige Bauteil 138 und den Sicherungsring 139 ein Kraftschluss erzeugt, welcher auf die Ausgangsnabe rückgekoppelt ist, womit der Kraftschluss innerhalb der Kupplung erfolgt.

Wie schon angesprochen, ist bei bisherigen Nasslauf-Doppelkupplungen in der Regel die Funktion einer zentralen, der Eingangsseite zugehörigen Nabe mit der Funktion der Ölversorgung der Doppelkupplung verbunden, was weitere Bauteile zwar vermeidet, aufgrund der Kosten für ein Multifunktionsteil jedoch zu durchaus erheblichen Kosten führt. Demgegenüber ist bei den erfindungsgemäßen Ausführungsbeispielen die Funktion der Übertragung eines eingangsseitig eingeleiteten Drehmoments und die Funktion der Versorgung mit Drucköl und Kühlöl auf verschiedene Bauteile aufgeteilt, wobei eine zentrale Ölnabe völlig entfallen ist. Stattdessen ist auf einen axial entsprechend langen Hals der Ausgangsnabe 30 der ersten Lamellenkupplunganordnung ein Hydraulikversorgungsteil 52 aufgesteckt, welches schon als Hydraulikeinheit 52 angesprochen wurde. Aus der hydraulischen Kupplungsbetätigung resultierende Axialkräfte werden mittels einer Stützscheibe 100 und eines Sprengrings 102 an der Ausgangsnabe 30 abgestützt, welche selbst vermittels der Anschlagflansches 76 in der entsprechenden Axialrichtung, also in Richtung zur Getriebeanordnung, an der erste Getriebeeingangswelle 32 abgestützt ist.

Die Hydraulik-Einheit kann ein Kunststoffgehäuse aufweisen und gewünschtenfalls insgesamt aus Kunststoff hergestellt sein. Bei den Ausführungsbeispielen dreht sich die Hydraulikeinheit 52 mit der Ausgangsnabe 30 und damit der Getriebeeingangswelle 32 mit, so dass zwischen dem als Betätigungskolben dienenden Lamellenträger 26 und einem auf den Betätigungsflansch 48 wirkenden Betätigungselement 104 kein Drehlager erforderlich ist. Das Betätigungselement 104 wird mittels eines beispielsweise als Hochdruckzylinder ausgeführten hydraulischen Nehmerzylinders gegen den Lamellenträger verschoben, um diesen gegen die Wirkung der angesprochenen elastischen Rückstellkräfte zur Kupplungsbetätigung axial zu verschieben. Ein dem Lamellenträger 28 zugeordnetes Betätigungselement 106 erstreckt sich mit in Umfangsrichtung beabstandeten Betätigungsfingern 108 durch ein sich an die Ausgangsnabe 30 nach radial außen anschließenden Flansch des Ausgangselements. Die Betätigungsfinger 108 wirken vermittels eines Zwischenrings 110 und eines Drehlagers 112 (im Falle der Fig. 1 und 2a/b als Kugellager oder Wälzlager ausgeführt, vorzugsweise stattdessen aber als Nadellager realisiert) auf den Betätigungsabschnitt 50 des Innenlamellenträgers 28 der zweiten Lamellenkupplung 18. Die Betätigungsfinger 108 können auch gegenüber dem Betätigungselement 106 gesonderte Komponenten sein und zwischen dem Zwischenring 110 und einem in den Fig. 1 und 2a/b dargestellten weiteren Ring 114 gehalten sein, auf den das Betätigungselement 106 wirkt. Die Betätigungselemente 104 und 106 können von den Kolben eines jeweiligen hydraulischen Nehmerzylinders, beispielsweise Hochdruck-Hydraulikzylinders, gebildet sein, denen über Versorgungskanäle der Hydraulikeinheit 52 von einer stationären Versorgungshülse Drucköl P1 bzw. P2 zugeführt wird. Eine in den Figuren nicht dargestellte stationäre Versorgungshülse bildet also zusammen mit einem Abschnitt der Hydraulikeinheit 52 eine Drucköl-Drehdurchführung. Die stationäre Hülse kann ferner auch zur Kühlölzuführung dienen und Durchlässen der Hydraulikeinheit 52 Kühlöl zuführen, wie durch den Pfeil K1 in den Fig. 1 und 2a/b veranschaulicht. Das Kühlöl wird im Falle dieser Ausführungsbeispiele durch Nuten am Innenumfang der Hydraulikeinheit 52, also zwischen der Hydraulikeinheit 52 und der Getriebeeingangswelle 30 axial zugeführt, um dann entsprechend den Pfeilen K und K2 den Lamellenpaketen zugeführt zu werden. Alternativ könnte die Ausgangsnabe 30 mit radialen Durchlassöffnungen ausgeführt sein, so dass das Kühlöl in einem Ringraum zwischen dieser Ausgangsnabe und der Getriebeeingangswelle 32 axial zugeführt wird, wie dies in Fig. 6 für eine anders gestaltete Hydraulikeinheit 52' dargestellt ist. Auch eine axiale Kühlölzufuhr zwischen den beiden Getriebeeingangswellen kommt durchaus in Betracht.

Die Hydraulikeinheit 52 ist gegenüber den übrigen Komponenten der Doppelkupplung gesondert herstellbar und mit ihren Komponenten zur Hydraulikeinheit montierbar und kann mit einer Schutzkappe versehen mit den übrigen Doppelkupplungs-Komponenten zu einer Doppelkupplungsbaueinheit montiert werden. Durch die Schutzkappe werden Verschmutzungen der Hydraulikeinheit und deren Ölanschlüsse vermieden, und es ist möglich, die Schutzkappe erst vor der Montage der Doppelkupplung an einem Getriebe zu entfernen.

Fig. 6 zeigt eine andere ausgestaltete Hydraulikeinheit 52', die die Hydraulikeinheit 52 bei den Ausführungsformen der Fig. 1 und 2a/b ersetzen kann. Die Hydraulikeinheit 52' weist zwei als Hochdruckzylinder ausgeführte Hydraulikzylinder ohne Fliehkraftausgleich auf. Aufgrund der geringen radialen Höhe der Zylinderräume 110 und 112 ist, wie auch bei der Hydraulikeinheit 52 der Fig. 1 und 2a/b, kein Fliehkraftausgleich nötig, da keine wesentlichen Fliehkräfte auftreten, die kompensiert werden müssten. Dies gilt in besonderem Maße für die Ausführungsform 52' der Fig. 6, bei der die Zylinderräume 110 und 112 radial sehr weit innen liegen und nur geringen Radialabstand voneinander aufweisen.

Als Betätigungelemente 104' und 106' dienen die Kolben der beiden Zylinder. Die beiden hydraulischen Nehmerzylinder sind mit ihren Kolben als Stufenzylinder ausgeführt. Gehäuse- bzw. Körperteile der Hydraulikeinheit 52', die zusammen mit den Kolben 104' und 106' die Zylinderräume begrenzen, sind in Fig. 6 mit 114 und 116 bezeichnet. Der Kühlölvolumenstrom wird von rechts kommend durch Nuten unter der Hydraulikeinheit 52' oder alternativ - wie in Fig. 6 durch Durchlässe 120 und 122 in der Nabe 30 dargestellt - zwischen der Nabe 30 und der Getriebeeingangswelle (Hohlwelle) 32 in die Doppelkupplung hinein geführt.

Das Hydraulikteil bzw. die Hydraulikeinheit kann, da sie separat herstellbar ist, unter Vermeidung graderzeugender Zerspanung hinsichtlich ihres Gehäuses bzw. ihrer Körperteile und der Betätigungskolben als Spritzgusskomponente bzw. Spritzgusskomponenten ausgeführt werden.

Anzumerken ist, dass erforderlichenfalls auf an sich bekannte Art und Weise auf einer jeweiligen Kolbenrückseite Ausgleichsräume zur Kompensation von im jeweiligen Druckraum auftretenden fliehkraftbedingten Drücken vorgesehen werden können. Dies gilt speziell für Niederdruck-Hydraulikzylinder, die beispielsweise für Drücke von etwa 15 bar ausgelegt sind.

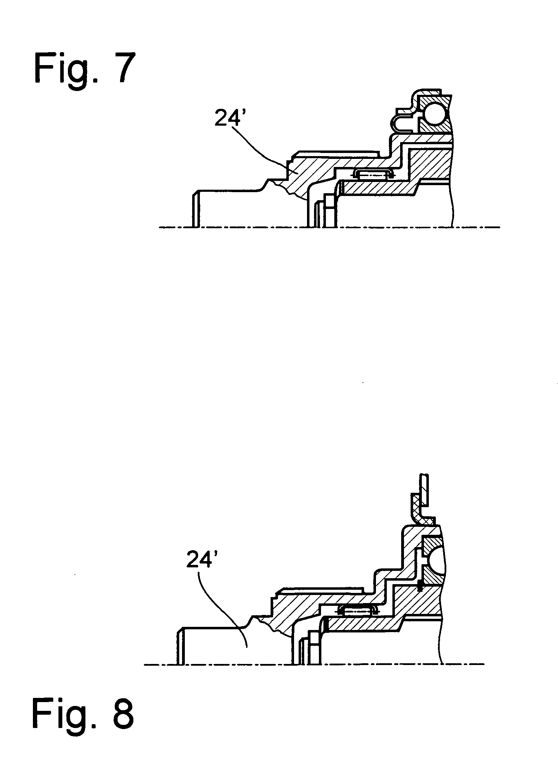

Gemäß den Ausführungsformen der Fig. 1 und 2a/b ist keine eingangsseitige Lagerung der Doppelkupplung 10 an bzw. in Richtung der Antriebseinheit (insbesondere Brennkraftmaschine oder Verbrennungsmotor) unter Vermittlung eines ZMS oder Torsionsschwingungsdämpfers vorgesehen. Fig. 7 und Fig. 8 zeigen eine Ausführungsvariante der Ausführungsform der Fig. 1 bzw. eine Ausführungsvariante der Ausführungsform der Fig. 2a/b, bei der anstelle eines Eingangsflansches 24 eine Eingangsnabe oder Eingangswelle 24' vorgesehen ist, die mittels eines Drehlagers radial lagerbar ist, beispielsweise an bzw. in der Primärseite eines Torsionsschwingungsdämpfers bzw. Zwei-Massen-Schwungrads oder an bzw. in einem Gehäuse der Antriebseinheit. Es kann eine Pilot-Lagerung realisiert sein. Der Pilotlagerzapfen kann hierbei integral mit der Eingansnabe 24 ausgeführt sein oder als separates Bauteil ausgeführt sein, welches nach Montage und Fixierung der Kupplungseinrichtung in die Eingangsnabe 24 dichtend eingepreßt wird.

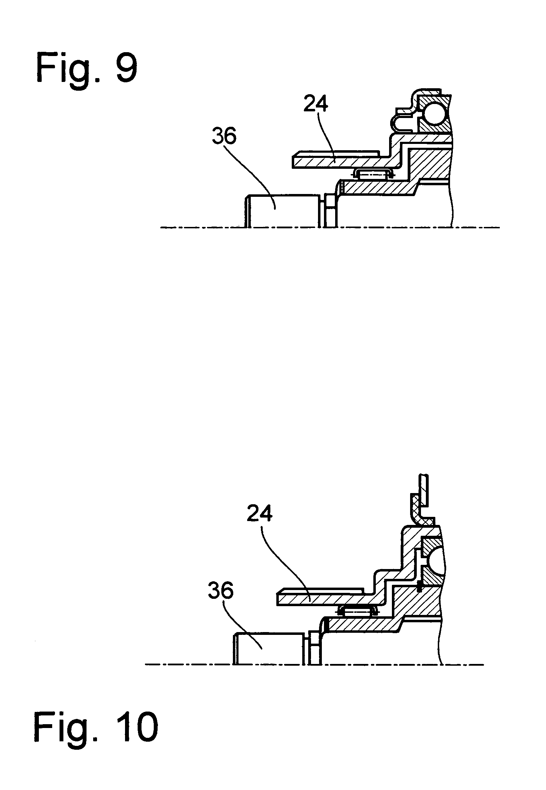

Die Fig. 9 und 10 zeigen demgegenüber Ausführungsvarianten der Doppelkupplungen gemäß Fig. 1 und 2 a/b, bei denen wie in den Fig. 1 und 2 a/b der Eingangsflansch 24 vorgesehen ist, statt dessen aber die radial innere Getriebeeingangswelle axial länger in Richtung zur Antriebseinheit ausgeführt ist und selbst vermittels eines Zwei-Massen-Schwungrads oder Torsionsschwingungsdämpfers oder direkt an bzw. in einem Gehäuse der Antriebseinheit antriebseinheitsseitig gelagert sein kann, etwa unter Realisierung eines Pilot-Lagerung. Der radiale Spalt zwischen Eingangswelle und Pilotlagerzapfen ermöglicht hierbei die Montage von Tellerfeder und Sicherungsring, abschließend wird dieser Spalt durch Einsetzen eines Wellendichtringes verschlossen.

Wichtige konstruktive Gesichtspunkte und erreichte Vorteile der dargestellten und erläuterten Ausführungsbeispiele sind die folgenden:
Bei der Ansteuerung der Lamellenpakete wird auf herkömmlich vorgesehene große Blechkolben verzichtet. Stattdessen ist deren Funktion die je Lamellenkupplung bauteil- und bauraumsparend in einen axial beweglich ausgeführten Innen- oder Außenlamellenträger integriert. Das Eingangsmoment wird über eine von einer Eingangswelle bzw. Eingangsnabe und einem beiden Lamellenkupplungen zugehörigen Eingangslamellenträger direkt beiden Lamellenkupplungen zugeführt, also nicht - abweichend vom Stand der Technik - über eine größere Anzahl von
   Bauteilen den Lamellenpaketen zugeführt. Der gemeinsame Eingangslamellenträger ist zwecks Momentenübergabe an die beiden Lamellenpakete an einem Lamellentragabschnitt sowohl innen als auch außen mit Mitnahmeverzahnungen ausgeführt. Insgesamt ergibt sich der Vorteil, dass gegenüber herkömmlichen Konstruktionen eine Anzahl von Bauteilen und verbindende Verbindungsstellen eingespart sind, so dass der Aufbau kostengünstiger ist.
   Die Funktion der Ölzufuhr einerseits und die Funktion, Lager- und Stützkräfte und Drehmomente zu übertragen, sind auf verschiedene Komponenten aufgeteilt, so dass verschiedene, für den jeweiligen Einsatzzweck optimal geeignete Werkstoffe eingesetzt werden können und großserienfähige Produktionsverfahren möglich sind.
   Anstelle einer Ölnabe ist ein vorstehend als Hydraulikeinheit bezeichneter Hydraulikbaustein eingesetzt, der außen an der auf der äußeren Getriebeeingangswelle sitzenden Ausgangsnabe fixiert ist und sich mit dieser mitdreht. Die Kupplungsbetätigung erfolgt vermittels zweier Betätigungskolben des Hydraulikbausteins radial innen auf einen jeweiligen Betätigungsabschnitt des zugeordneten Lamellenträgers. Ein solcher Hydraulikbaustein ist aber nicht zwingend. Alternativ könnte die Betätigung direkt mechanisch von dem Getriebe her erfolgen. In diesem Fall könnte die auf der äußeren Getriebeeingangswelle sitzende Ausgangsnabe mittels eines Lagers axial an einer Getriebezwischenwand abgestützt sein. Die Kupplung würde sich dann axial über den Sicherungsring auf der inneren Getriebeeingangswelle abstützen.
   Insbesondere zeichnen sich die beschriebenen Ausführungsbeispiele durch eine axial sehr kurze Primärseite (Eingangswelle bzw. Eingangsnabe und Eingangslamellenträger) aus, wodurch eine getriebeseitige Lagerung besonders sinnvoll wird und insbesondere der beschriebene, strukturell einfache und kostengünstige Gesamtaufbau und der Wegfall der herkömmlichen, aufwendigen Ölnabe ermöglicht wird.

Es ergeben sich insbesondere auch die folgenden Vorteile:
Es entfallen eine Reihe von Bauteilen bzw. diese sind zumindest vereinfacht. Insbesondere entfallen Verbindungsstellen, insbesondere eine größere Anzahl von Lagerschweißnähten. Es ist somit ein erheblich vereinfachter Montageablauf möglich. Gegenüber herkömmlichen Lösungen ist eine große Kostenreduzierung hinsichtlich der Herstellung und Montage zu erwarten. Auch lassen sich funktionelle Vorteile, speziell auch bezüglich einer bei der Kupplungsbetätigung auftretenden Hysterese, erwarten.

Vorteile ergeben sich auch hinsichtlich Bauraum und Gewicht. Insbesondere außen, also auf größerem Durchmesser, ist eine extrem schmale Bauweise möglich. Es besteht also ein axial sehr kleiner Bauraumbedarf, so dass bei gegebenem Bauraum zum Beispiel mehr Platz für ein Zwei-Massen-Schwungrad oder dergleichen zur Verfügung steht. Infolge entfallender Bauteile und der Möglichkeit, Kunststoff anstelle bisher Stahl zu verwenden, ist eine deutliche Gewichtsreduzierung möglich.

Ist eine hydraulische Betätigung mittels einer Hydraulikeinheit vorgesehen, so ermöglicht die gesonderte Herstellbarkeit des Hydraulikteils einerseits und der restlichen Doppelkupplung andererseits eine Fertigung der Hydraulikzylinder und des Hydraulikteils einschließlich einer Drehdurchführung unter extremen Sauberkeitsbedingungen, ggf. im Reinraum.

Für eine Mehrfachkupplungseinrichtung, umfassend eine Eingangsseite und eine Ausgangsseite mit einem mit einem ersten Getriebeeingangselement gekoppelten oder koppelbaren ersten Ausgangselement und einem mit einem zweiten Getriebeeingangselement gekoppelten oder koppelbaren zweiten Ausgangselement und zwei jeweils einem der beiden Ausgangselemente zugeordneten Lamellen-Kupplungsanordnungen, die zwischen Lamellenträgern angeordnete Lamellenpakete aufweisen, wird vorgeschlagen, dass zum Betätigen wenigstens einer der Lamellen-Kupplungsanordnungen wenigstens einer der Lamellenträger zumindest an einem Innenlamellen eines der Lamellenpakete zugeordneten Innenlamellentragabschnitt oder zumindest an einem Außenlamellen eines der Lamellenpakete zugeordneten Außenlamellentragabschnitt axial verstellbar ist.

## Patentansprüche

1. Mehrfachkupplungseinrichtung, insbesondere Doppelkupplungseinrichtung (10), zur Drehmomentübertragung in einem Abtriebsstrang zwischen einer Antriebsanordnung und einer Getriebeanordnung, umfassend:
- eine mit einem Abtriebselement der Antriebsanordnung koppelbare Eingangsseite (24);
- eine der Getriebeanordnung zugeordnete Ausgangsseite (26, 28) mit einem mit einem ersten Getriebeeingangselement (32) koppelbaren ersten Ausgangselement (30) und einem mit einem zweiten Getriebeeingangselement (36) koppelbaren zweiten Ausgangselement (34);
- eine dem ersten Ausgangselement (30) zugeordnete, auf Basis axialer Relativbewegungen betätigbare erste Lamellen-Kupplungsanordnung (12) und eine dem zweiten Ausgangselement (34) zugeordnete, auf Basis axialer Relativbewegungen betätigbare zweite Lamellen-Kupplungsanordnung (18), die jeweils wenigstens ein zwischen Lamellenträgern (26, 20; 28, 20) angeordnetes Lamellenpaket (14; 16) aufweisen, welches während einer Betätigung der Lamellen-Kupplungsanordnung im Sinne eines Einrückens axial einspannbar ist, um Drehmoment zwischen der Eingangsseite und dem betreffenden Ausgangselement zu übertragen;
wobei zum Betätigen wenigstens einer (12, 18) der Lamellen-Kupplungsanordnungen wenigstens einer (20, 28) der Lamellenträger zumindest an einem Innenlamellen eines der Lamellenpakete zugeordneten Innenlamellentragabschnitt (46) oder zumindest an einem Außenlamellen eines der Lamellenpakete zugeordneten Außenlamellentragabschnitt (44) axial verstellbar ist, und wobei ausgangsseitig ein der ersten Lamellen-Kupplungsanordung zugehöriger erster Lamellenträger, vorzugsweise ein Außenlamellenträger (26), und ein der zweiten Lamellen-Kupplungsanordnung zugehöriger zweiter Lamellenträger, vorzugsweise ein Innenlamellenträger (28), vorgesehen ist,
**dadurch gekennzeichnet, dass** von dem ersten und dem zweiten Lamellenträger wenigstens einer (26,28) zur Betätigung der zugeordneten Lamellen-Kupplungsanordnung axial verstellbar ist.

2. Mehrfachkupplungeinrichtung nach Anspruch 1, **dadurch gekennzeichnet, dass** der axial verstellbare Lamellenträger (28') mit einem zugeordneten, gegenüber dem Lamellenträger gesonderten Ausgangsetement (29') drehfest verbunden und zur Betätigung der zugeordneten Lamellen-Kupplungsanordnung (18) gegenüber dem Ausgangselement (29') axial verstellbar ist.

3. Mehrfachkupplungseinrichtung nach Anspruch 2, **dadurch gekennzeichnet, dass** der Lamellenträger (28') mittels einer die axiale Verstellbarkeit gebenden axialen Relatiwerschiebeeinrichtung (60') mit dem Ausgangselement (29') verbunden und radial an diesem abgestützt ist.

4. Mehrfachkupplungseinrichtung nach Anspruch 1, **dadurch gekennzeichnet, dass** von dem ersten und dem zweiten Lamellenträger wenigstens einer (26, 28) einen radial äußeren, den Innenlamellentragabschnitt (46) bzw. Außenlamellentragabschnitt (44) aufweisenden Abschnitt aufweist, der zur Betätigung der zugeordneten Lamellen-Kupplungsanordnung gegenüber einem radial inneren Abschnitt des Lamellenträgers axial verstellbar ist.

5. Mehrfachkuppiungseinrichtung nach Anspruch 4, **dadurch gekennzeichnet, dass** der radial innere Abschnitt des Lamellenträgers (26; 28) das Ausgangselement bildet oder dieses aufweist.

6. Mehrfachkupplungseinrichtung nach Anspruch 4 oder 5, **dadurch gekennzeichnet, dass** der radial innere und der radial äußere Abschnitt des Lamellenträgers durch einen axial elastischen Verbindungsabschnitt (40; 42) des Lamellenträgers (26; 28) drehfest und radial abstützend verbunden sind.

7. Mehrfachkupplungseinrichtung nach Anspruch 6, **dadurch gekennzeichnet, dass** der Verbindungsabschnitt eine Federanordnung, vorzugsweise eine Fächerscheibenanordnung (44; 46) oder eine Blattfederanordnung, aufweist.

8. Mehrfachkupplungseinrichtung nach einem der Ansprüche 2 bis 7, **dadurch gekennzeichnet, dass** der Lamellenträger (26; 28) bzw. der radial äußere Abschnitt des Lamellenträgers (26; 28) zur axialen Verstellung und damit Betätigung der zugeordneten Lamellen-Kuppiungsanordnung hydraulisch oder mechanisch betätigbar ist mittels einer vorzugsweise auf Seiten der Getriebeanordnung angeordneten hydraulischen oder mechanischen Betätigungsanordnung (52; 52').

9. Mehrfachkupplungseinrichtung nach Anspruch 8, **gekennzeichnet durch** eine direkt oder indirekt an wenigstens einer als Getriebeeingangselement dienenden Getriebeeingangswelle angeordnete Hydraulik-Einheit (52; 52') oder Mechanik-Einheit, die wenigstens ein direkt oder indirekt auf den Lamellenträger wirkendes Betätigungselement zur Betätigung des Lamellenträgers bzw. des radial äußeren Abschnitts des Lamellenträgers aufweist.

10. Mehrfachkupplungseinrichtung nach Anspruch 9, **dadurch gekennzeichnet, dass** die Hydraulik-Einheit oder Mechanik-Einheit an einem Nabenabschnitt des Ausgangselements einer der Lamellen-Kupplungsanordnungen angeordnet und vermittels dieses Nabenabschnitts an der zugeordneten einen Getriebeeingangswelle gehalten ist.

11. Mehrfachkupplungseinrichtung nach Anspruch 9 oder 10, **dadurch gekennzeichnet, dass** die Hydraulik-Einheit oder Mechanik-Einheit vermittels der Getriebeeingangswelle oder/und vermittels einer Gehäusewandung der Getriebeanordnung axial abstützbar ist, zur Abstützung von bei der Betätigung resultierenden axialen Gegenkräften.

12. Mehrfachkupplungseinrichtung nach einem der Ansprüche 9 bis 11, **dadurch gekennzeichnet, dass** die Hydraulik-Einheit oder Mechanik-Einheit oder ein das Betätigungselement aufweisender Betätigungsabschnitt derselben sich mit der Getriebeeingangswelle bzw. dem Nabenabschnitt mitdreht.

13. Mehrfachkupplungseinrichtung nach einem der Ansprüche 9 bis 12, **dadurch gekennzeichnet, dass** die Hydraulik-Einheit bzw. Mechanik-Einheit wenigstens ein direkt oder indirekt auf den ersten Lamellenträger (26) wirkendes, diesem zugeordnetes erstes Betätigungselement (104; 104') und wenigstens ein direkt oder indirekt auf den zweiten Lamellenträger (28) wirkendes, diesem zugeordnetes zweites Betätigungselement (106; 106') aufweist.

14. Mehrfachkupplungseinrichtung nach Anspruch 12 sowie nach Anspruch 13, **dadurch gekennzeichnet, dass** nur eines (106; 106') der beiden Betätigungselemente vermittels eines Drehlagers (112) auf den zugeordneten Lamellenträger (28) wirkt.

15. Mehrfachkupplungseinrichtung nach einem der Ansprüche 9 bis 14, **dadurch gekennzeichnet, dass** auf das Betätigungselement (104, 106; 104', 106') wenigstens ein vorzugsweise als Hochdruckzylinder ausgeführter hydraulischer Nehmerzylinder der Hydraulik-Einheit (52; 52') wirkt.

16. Mehrfachkupplungseinrichtung nach einem der Ansprüche 9 bis 15, **dadurch gekennzeichnet, dass** die Lamellen-Kupplungsanordnungen (12, 18) für einen Nasslaufbetrieb vorgesehen sind, wofür den Lamellen-Kupplungsanordnungen Betriebsflüssigkeit, insbesondere Kühlöl, zuführbar ist, vorzugsweise von Seiten der Getriebeanordnung.

17. Mehrfachkupplungseinrichtung nach Anspruch 16, **dadurch gekennzeichnet, dass** die Betriebsflüssigkeit durch wenigstens einen Zufuhrkanal zwischen der Hydraulik-Einheit (52; 52') bzw. Mechanik-Einheit und der Getriebeeingangswelle bzw. dem Nabenabschnitt (30) oder/und zwischen dem Nabenabschnitt und der Getriebeeingangswelle zuführbar ist.

## Claims

1. Multiple clutch device, in particular double clutch device (10), for transmitting torque in a drivetrain between a drive assembly and a transmission assembly, comprising:
- an input side (24) which can be coupled to a drive output element of the drive assembly;
- an output side (26, 28) which is assigned to the transmission assembly and which has a first output element (30), which can be coupled to a first transmission input element (32), and a second output element (34), which can be coupled to a second transmission input element (36);
- a first multiplate clutch arrangement (12) which is assigned to the first output element (30) and which can be actuated on the basis of axial relative movements, and a second multiplate clutch arrangement (18) which is assigned to the second output element (34) and which can be actuated on the basis of axial relative movements, said multiplate clutch arrangements having in each case at least one plate pack (14; 16) which is arranged between plate carriers (26, 20; 28, 20) and which, during an actuation of the multiplate clutch arrangement, can be braced axially in the sense of an engagement in order to transmit torque between the input side and the respective output element;
wherein, for the actuation of at least one (12, 18) of the multiplate clutch arrangements, at least one (20, 28) of the plate carriers is axially adjustable at least on an inner plate carrying portion (46) assigned to inner plates of one of the plate packs or at least on an outer plate carrying portion (44) assigned to outer plates of one of the plate packs, and wherein at the output side there are provided a first plate carrier, preferably an outer plate carrier (26), which is assigned to the first multiplate clutch arrangement, and a second plate carrier, preferably an inner plate carrier (28), which is assigned to the second multiplate clutch arrangement,
**characterized in that**, of the first and second plate carriers, at least one (26, 28) is axially adjustable for the actuation of the associated multiplate clutch arrangement.

2. Multiple clutch device according to Claim 1, **characterized in that** the axially adjustable plate carrier (28') is connected in a rotationally conjoint manner to an associated output element (29') separate from the plate carrier, and is axially adjustable relative to the output element (29') for the actuation of the associated multiplate clutch arrangement (18).

3. Multiple clutch device according to Claim 2, **characterized in that** the plate carrier (28') is connected to the output element (29'), and supported radially on the latter, via an axial relative displacement device (60') which provides the axial adjustability.

4. Multiple clutch device according to Claim 1, **characterized in that**, of the first and second plate carriers, at least one (26, 28) has a radially outer portion which has the inner plate carrying portion (46) or outer plate carrying portion (44) respectively, said radially outer portion being axially adjustable relative to a radially inner portion of the plate carrier for the actuation of the associated multiplate clutch arrangement.

5. Multiple clutch device according to Claim 4, **characterized in that** the radially inner portion of the plate carrier (26; 28) forms or has the output element.

6. Multiple clutch device according to Claim 4 or 5, **characterized in that** the radially inner and radially outer portions of the plate carrier are connected in a rotationally conjoint and radially supporting manner by an axially elastic connecting portion (40; 42) of the plate carrier (26; 28).

7. Multiple clutch device according to Claim 6, **characterized in that** the connecting portion has a spring arrangement, preferably a serrated washer arrangement (44; 46) or a leaf spring arrangement.

8. Multiple clutch device according to one of Claims 2 to 7, **characterized in that** the plate carrier (26; 28) or the radially outer portion of the plate carrier (26; 28) can, for axial adjustment and therefore actuation of the associated multiplate clutch arrangement, be hydraulically or mechanically actuated by means of a hydraulic or mechanical actuating arrangement (52; 52') arranged preferably on the transmission assembly.

9. Multiple clutch device according to Claim 8, **characterized by** a hydraulic unit (52; 52') or mechanical unit which is arranged directly or indirectly on at least one transmission input shaft which serves as a transmission input element, said hydraulic unit or mechanical unit having at least one actuation element, which acts directly or indirectly on the plate carrier, for actuating the plate carrier or the radially outer portion of the plate carrier.

10. Multiple clutch device according to Claim 9, **characterized in that** the hydraulic unit or mechanical unit is arranged on a hub portion of the output element of one of the multiplate clutch arrangements and, by means of said hub portion, is held on the associated transmission input shaft.

11. Multiple clutch device according to Claim 9 or 10, **characterized in that** the hydraulic unit or mechanical unit can be supported axially by means of the transmission input shaft and/or by means of a housing wall of the transmission assembly in order to support axial counterforces resulting from the actuation.

12. Multiple clutch device according to one of Claims 9 to 11, **characterized in that** the hydraulic unit or mechanical unit or an actuation portion, which has the actuation element, thereof rotates conjointly with the transmission input shaft or the hub portion.

13. Multiple clutch device according to one of Claims 9 to 12, **characterized in that** the hydraulic unit or mechanical unit has at least one first actuation element (104; 104'), which acts directly or indirectly on and is assigned to the first plate carrier (26), and at least one second actuation element (106; 106') which acts directly or indirectly on and is assigned to the second plate carrier (28).

14. Multiple clutch device according to Claim 12 and according to Claim 13, **characterized in that** only one (106; 106') of the two actuation elements acts on the associated plate carrier (28) via a rotary bearing (112).

15. Multiple clutch device according to one of Claims 9 to 14, **characterized in that** at least one hydraulic slave cylinder, preferably in the form of a high-pressure cylinder, of the hydraulic unit (52; 52') acts on the actuation element (104, 106; 104', 106').

16. Multiple clutch device according to one of Claims 9 to 15, **characterized in that** the multiplate clutch arrangements (12, 18) are provided for wet-running operation, for which purpose operating fluid, in particular cooling oil, can be supplied to the multiplate clutch arrangements preferably from the transmission assembly.

17. Multiple clutch device according to Claim 16, **characterized in that** the operating fluid can be supplied through at least one supply duct between the hydraulic unit (52; 52') or mechanical unit and the transmission input shaft or the hub portion (30), and/or between the hub portion and the transmission input shaft.

## Revendications

1. Dispositif d'embrayage multiple, en particulier dispositif d'embrayage double (10), pour le transfert de couple dans un système de prise de force entre un agencement d'entraînement et un agencement de boîte de vitesses, comprenant :
- un côté d'entrée (24) pouvant être accouplé à un élément de prise de force de l'agencement d'entraînement ;
- un côté de sortie (26, 28) associé à l'agencement de boîte de vitesses avec un premier élément de sortie (30) pouvant être accouplé à un premier élément d'entrée de boîte de vitesses (32) et un deuxième élément de sortie (34) pouvant être accouplé à un deuxième élément d'entrée de boîte de vitesses (36) ;
- un premier agencement d'embrayage à disques (12) associé au premier élément de sortie (30), pouvant être actionné sur la base de mouvements relatifs axiaux et un deuxième agencement d'embrayage à disques (18) associé au deuxième élément de sortie (34) et pouvant être actionné sur la base de mouvements relatifs axiaux, lesquels agencements présentent à chaque fois au moins un paquet de disques (14 ; 16) disposé entre des supports de disques (26, 20 ; 28, 20), lequel paquet de disques peut être serré axialement pendant un actionnement de l'agencement d'embrayage à disques dans le sens d'un embrayage, afin de transférer un couple entre le côté d'entrée et l'élément de sortie concerné ;
dans lequel, pour l'actionnement d'au moins l'un (12, 18) des agencements d'embrayage à disques, au moins l'un (20, 28) des supports de disques peut être déplacé axialement au niveau d'une portion de support de disques intérieurs (46) associée aux disques intérieurs d'un des paquets de disques, ou au moins au niveau d'une portion de support de disques extérieurs (44) associée aux disques extérieurs d'un des paquets de disques, et dans lequel, du côté de la sortie, un premier support de disques associé au premier agencement d'embrayage à disques, de préférence un support de disques extérieurs (26), et un deuxième support de disques associé au deuxième agencement d'embrayage à disques, de préférence un support de disques intérieurs (28), sont prévus,
**caractérisé en ce que**, parmi le premier et le deuxième supports de disques, au moins l'un (26, 28) peut être déplacé axialement pour actionner l'agencement d'embrayage à disques associé.

2. Dispositif d'embrayage multiple selon la revendication 1, **caractérisé en ce que** le support de disques déplaçable axialement (28') est connecté de manière solidaire en rotation à un élément de sortie associé (29'), séparé du support de disques, et peut être déplacé axialement, pour actionner l'agencement d'embrayage à disques associé (18), par rapport à l'élément de sortie (29').

3. Dispositif d'embrayage multiple selon la revendication 2, **caractérisé en ce que** le support de disques (28') est connecté à l'élément de sortie (29') au moyen d'un dispositif de déplacement relatif axial (60') fournissant la capacité de déplacement axial et est supporté radialement sur cet élément de sortie.

4. Dispositif d'embrayage multiple selon la revendication 1, **caractérisé en ce que**, parmi le premier et le deuxième support de disques, au moins l'un (26, 28) présente une portion radialement extérieure présentant la portion de support de disques intérieurs (46) ou la portion de support de disques extérieurs (44), qui peut être réglée axialement pour l'actionnement de l'agencement d'embrayage à disques associés par rapport à une portion radialement intérieure du support de disques.

5. Dispositif d'embrayage multiple selon la revendication 4, **caractérisé en ce que** la portion radialement intérieure du support de disques (26 ; 28) forme l'élément de sortie ou présente celui-ci.

6. Dispositif d'embrayage multiple selon la revendication 4 ou 5, **caractérisé en ce que** la portion radialement intérieure et la portion radialement extérieure du support de disques sont connectées de manière solidaire en rotation et avec appui radial par une portion de connexion axialement élastique (40 ; 42) du support de disques (26 ; 28).

7. Dispositif d'embrayage multiple selon la revendication 6, **caractérisé en ce que** la portion de connexion présente un agencement de ressort, de préférence un agencement de rondelles ressort (44 ; 46) ou un agencement de ressorts à lames.

8. Dispositif d'embrayage multiple selon l'une quelconque des revendications 2 à 7, **caractérisé en ce que** le support de disques (26 ; 28) ou la portion radialement extérieure du support de disques (26 ; 28) peuvent être actionnés hydrauliquement ou mécaniquement en vue du déplacement axial et donc de l'actionnement de l'agencement d'embrayage à disques associé, au moyen d'un agencement d'actionnement hydraulique ou mécanique (52 ; 52') disposé de préférence du côté de l'agencement de boîte de vitesses.

9. Dispositif d'embrayage multiple selon la revendication 8, **caractérisé par** une unité hydraulique (52 ; 52') ou une unité mécanique disposée directement ou indirectement sur au moins un arbre d'entrée de boîte de vitesses servant d'élément d'entrée de boîte de vitesses, laquelle unité présente au moins un élément d'actionnement agissant directement ou indirectement sur le support de disques pour l'actionnement du support de disques ou de la portion radialement extérieure du support de disques.

10. Dispositif d'embrayage multiple selon la revendication 9, **caractérisé en ce que** l'unité hydraulique ou l'unité mécanique est disposée sur une portion de moyeu de l'élément de sortie de l'un des agencements d'embrayage à disques et est maintenue au moyen de cette portion de moyeu sur l'arbre d'entrée de boîte de vitesses associé.

11. Dispositif d'embrayage multiple selon la revendication 9 ou 10, **caractérisé en ce que** l'unité hydraulique ou l'unité mécanique peut être supportée axialement au moyen de l'arbre d'entrée de boîte de vitesses et/ou au moyen d'une paroi de boîtier de l'agencement de boîte de vitesses, en vue du support des forces axiales opposées résultant lors de l'actionnement.

12. Dispositif d'embrayage multiple selon l'une quelconque des revendications 9 à 11,
**caractérisé en ce que** l'unité hydraulique ou l'unité mécanique ou une portion d'actionnement de celle-ci, présentant l'élément d'actionnement, tourne conjointement avec l'arbre d'entrée de boîte de vitesses ou la portion de moyeu.

13. Dispositif d'embrayage multiple selon l'une quelconque des revendications 9 à 12, **caractérisé en ce que** l'unité hydraulique ou l'unité mécanique présente au moins un premier élément d'actionnement (104 ; 104') agissant directement ou indirectement sur le premier support de disques (26) et associé à ce dernier, et au moins un deuxième élément d'actionnement (106 ; 106') agissant directement ou indirectement sur le deuxième support de disques (28) et associé à ce dernier.

14. Dispositif d'embrayage multiple selon la revendication 12 et selon la revendication 13, **caractérisé en ce que** seulement l'un (106 ; 106') des deux éléments d'actionnement agit au moyen d'un palier pivotant (112) sur le support de disques associé (28).

15. Dispositif d'embrayage multiple selon l'une quelconque des revendications 9 à 14, **caractérisé en ce qu'**au moins un cylindre récepteur hydraulique de l'unité hydraulique (52 ; 52'), réalisé de préférence sous forme de cylindre haute pression, agit sur l'élément d'actionnement (104, 106 ; 104', 106').

16. Dispositif d'embrayage multiple selon l'une quelconque des revendications 9 à 15, **caractérisé en ce que** les agencements d'embrayage à disques (12, 18) sont prévus pour un fonctionnement humide, pour lequel un liquide de travail, notamment de l'huile de refroidissement, peut être acheminé aux agencements d'embrayage à disques, de préférence depuis l'agencement de boîte de vitesses.

17. Dispositif d'embrayage multiple selon la revendication 16, **caractérisé en ce que** le liquide de travail peut être acheminé par au moins un conduit d'alimentation entre l'unité hydraulique (52 ; 52') ou l'unité mécanique et l'arbre d'entrée de boîte de vitesses ou la portion de moyeu (30) et/ou entre la portion de moyeu et l'arbre d'entrée de boîte de vitesses.
